# EUROPÄISCHE PATENTANMELDUNG

(11) **EP 0 530 383 A1**
(43) Veröffentlichungstag der Anmeldung: **10.03.1993**
(21) Anmeldenummer: 91113060.7
(22) Anmeldetag: 02.08.1991
(51) Int. Cl.: B21D 22/14, B21D 22/18, C21D 1/42

(54) **Verfahren und Vorrichtung zur Formgebung von Werkstücken**

(71) Anmelder: ZEPPELIN-Metallwerke GmbH, D-88015 Friedrichshafen (DE)
(72) Erfinder: Sieger, Erich, W-7990 Friedrichshafen (DE)
(74) Vertreter: Grünecker, Kinkeldey, Stockmair & Schwanhäusser Anwaltssozietät

(57) **Zusammenfassung**

Es wird ein Verfahren und eine Vorrichtung zur Formgebung von Werkstücken (2) aus einem Metallblech in einer Formgebungsvorrichtung, insbesondere einer mit einer Spanneinrichtung (1) versehenen Drückvorrichtung beschrieben, wobei das Werkstück einem Wärmebehandlungsverfahren unterzogen wird. Um das Verfahren mit einfachem apparativen Aufwand schneller und kostengünstiger zu machen, wird vorgeschlagen, das Wärmebehandlungsverfahren am in die Spannvorrichtung (1) der Formgebungsvorrichtung eingespannten Werkstück (2) mit Hilfe einer induktiven Erwärmungseinrichtung (5) durchzuführen.

## Beschreibung

Die Erfindung bezieht sich auf ein Verfahren zur Formgebung von Werkstücken der im Oberbegriff von Anspruch 1 erläuterten Art und auf eine Vorrichtung zur Formgebung von Werkstücken der im Oberbegriff von Anspruch 8 erläuterten Art.

Formgebungsverfahren, wie beispielsweise Drückverfahren in einer Drückvorrichtung, die eine Wärmebehandlung des Werkstückes vor, während oder nach dem Umformen erfordern, sind im Stand der Technik in großer Zahl bekannt. Es ist weiterhin bereits bekannt, Drückverfahren unter einer erhöhten Temperatur (Warmdrücken) durchzuführen. Bei den bekannten Verfahren müssen jedoch die teilweise oder vollständig fertig verformten Werkstücke für eine Wärmebehandlung, sei es nun ein Lösungsglühen an teilweise geformten Teilen, um einen höheren Umformungsgrad oder um einen gewünschten Grad der Kaltverfestigung beim Fertigdrücken zu erreichen, sei es ein Lösungs- oder Spannungsarmglühen eines fertig geformten Teiles, der Formgebungsvorrichtung entnommen und in einen Wärmebehandlungsofen eingesetzt werden. Dieses Verfahren ist relativ umständlich und zeitaufwendig.

Der Erfindung liegt somit die Aufgabe zugrunde, ein Verfahren und eine Vorrichtung bereitzustellen, mit der Werkstücke aus Metallblechen einfach und wenig zeitaufwendig wärmebehandelt werden können.

Die Aufgabe wird bei einem Verfahren durch die in Anspruch 1 angegebenen Merkmale gelöst.

Die Aufgabe wird bei einer Vorrichtung durch die in Anspruch 8 angegebenen Merkmale gelöst.

Nach dem erfindungsgemäßen Verfahren und durch die erfindungsgemäße Vorrichtung kann die Wärmebehandlung direkt am eingespannten Werkstück durchgeführt werden. Das mehrmalige Ein- und Ausspannen der Teile entfällt. Dadurch und durch die verkürzten Aufheizzeiten durch die induktive Erwärmung wird der Fertigungsdurchlauf wesentlich verkürzt. Die kurzen Aufheizzeiten wirken sich auch positiv auf die Werkstoffeigenschaften aus, da beispielsweise ein geringeres Kornwachstum zu beobachten ist und, speziell bei Titanlegierungen, weniger Sauerstoff, Wasserstoff und Stickstoff aufgenommen wird. Ein etwa auftretender Wärmebehandlungsverzug kann sofort anschließend durch einen korrigierenden Formgebungsschritt beseitigt werden. Da kein zusätzlicher Wärmebehandlungsofen mehr erforderlich ist, hält sich auch der apparative Aufwand in Grenzen.

Vorteilhafte Weiterbildungen des erfindungsgemäßen Verfahrens und der erfindungsgemäßen Vorrichtung sind den Unteransprüchen zu entnehmen.

Dabei soll insbesondere darauf hingewiesen werden, daß die Abschreckung gemäß Anspruch 2 bzw. die Ausgestaltung der Abschreckeinrichtung gemäß den Ansprüchen 9 und 13 zu im Vergleich zur Abschreckung bei Ofenglühung besonders kurzen Abschreckzeiten führt. Dadurch werden beispielsweise bei CrNi-Stählen Karbidausscheidungen vermieden und ein weicherer Zustand nach der Glühung erreicht.

Ein Ausführungsbeispiel der Erfindung wird nachfolgend anhand der schematischen Zeichnung näher erläutert. Es zeigen:
- Figur 1: eine Draufsicht auf eine Spanneinrichtung einer erfindungsgemäßen Vorrichtung zur Durchführung des erfindungsgemäßen Verfahrens, und
- Figur 2: die geschnittene Seitenansicht von Figur 1.

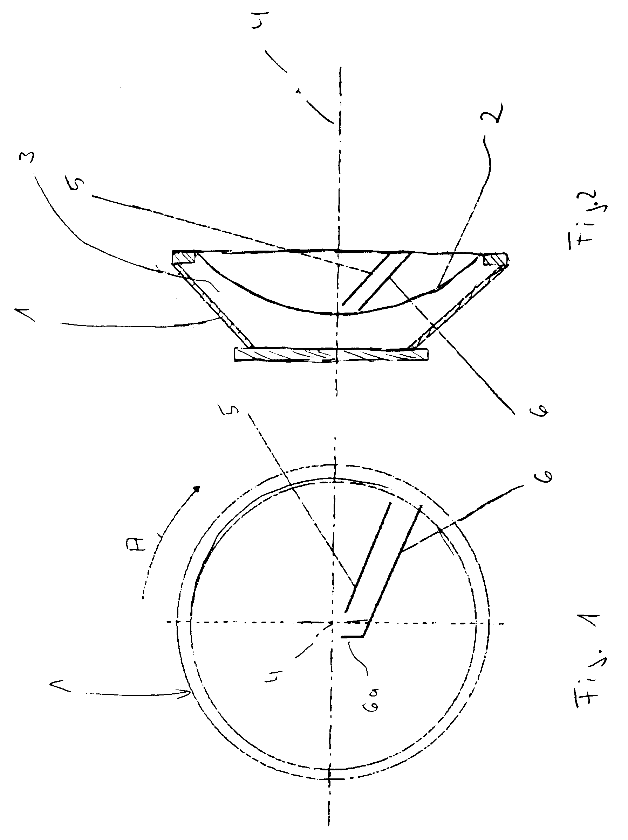

In den Figuren 1 und 2 ist in schematischer Darstellung ein Spannwerkzeug 1 einer nicht dargestellten Drückvorrichtung gezeigt. Die Drückvorrichtung kann eine herkömmliche Drückvorrichtung sein, ist jedoch bevorzugt eine neuartige Drückvorrichtung, wie sie in der nicht vorveröffentlichten, beigefügten europäischen Anmeldung 91108102.4 beschrieben wird, deren Offenbarungsgehalt hiermit in die vorliegende Beschreibung übernommen wird. Diese neuartige Drückvorrichtung zeichnet sich dadurch aus, daß eine in die Spannvorrichtung 1 mit ihrem Umfang fest eingespannte und ggf. vorgeformte Metallblechronde 2 mit Hilfe einer in den Figuren 1 und 2 nicht gezeichneten, jedoch herkömmlichen Drückrolle frei, d.h. ohne Drückform, in einen Freiraum 3 der Spannvorrichtung 1 hineingewölbt wird. Dabei bleibt auch zwischen dem fertig geformten Werkstück 2 und der Spanneinrichtung 1 ein allseitiger Abstand. Dieses Freidrücken erfordert selbstverständlich eine exakt gesteuerte Führung der Drückrolle, wobei Rückfederungs- und Verformungseigenschaften des speziellen Werkstoffes bei der Steuerung der Drückrolle berücksichtigt werden.

Im dargestellten Ausführungsbeispiel soll die Metallblechronde 2 zu einem gewölbten Behälterboden verformt werden. Zu diesem Zweck rotiert die Spannvorrichtung 1 mit dem eingespannten Werkstück 2 um eine waagerechte Achse 4 in Richtung des Pfeiles A.

Der Spannvorrichtung 1 ist eine induktive Erwärmungseinrichtung in Form einer langgestreckten Induktionsspule 5 zugeordnet. Die Induktionsspule 5 erstreckt sich vom Umfang des Werkstückes 2 in der Nähe der Einspannstelle bis in die Nähe der Drehachse 4. Wie Figur 1 zeigt, verläuft die langgestreckte Induktionsspule 5 nicht direkt radial, sondern derart schräg, daß das der Drehachse 4 zugewandte, innere Ende gegenüber dem umfangsseitigen Ende nachläuft. Auf diese Weise wird eine bessere Wärmeverteilung in Bereichen des Werkstückes nahe der Drehachse erreicht, die ja wegen der dort geringeren Umfangsgeschwindigkeit der Heizung längere Zeit ausgesetzt sind als umfangsnähere Bereiche.

Parallel und in Drehrichtung A nachlaufend zur langgestreckten Induktionsheizung 5 ist eine langgestreckte Abschreckdüse 6 zum Abschrecken des Werkstückes 2 angeordnet. Die Abschreckdüse 6 erstreckt sich wiederum vom umfangsseitigen Bereich des Werkstückes 2 bis in die Nähe der Drehachse, reicht dort in ihrer Länge über die Länge der Induktionsspule 5 hinaus und endet in einem parallel zum Radius des Werkstückes 2 abgewinkelten Abschnitt 6a, durch den die Bereiche des Werkstückes 2 in Drehachsennähe besonders intensiv gekühlt werden können. Sowohl die Induktionsheizung 5 als auch die Abschreckdüse 6 sind bewegbar angeordnet, und können über eine Computersteuerung, die ggf. mit der Computersteuerung der Drückrolle gekoppelt ist, zur genau dem vorab bestimmten Oberflächenbereich des wärmezubehandelnden Werkstückes 2 bewegt werden. Die Parameter des Verfahrens, beispielsweise der Abstand zwischen der Induktionsheizung 5 und der Abschreckdüse 6 und der Abstand beider zum Werkstück 2, die Wassermenge und die Düsenform der Abschreckdüse, die Stromstärke und die Frequenz sowie die Induktorwicklung und -form der Induktionsheizung 5, und die Drehzahl des Werkstückes 2 müssen vorab empirisch auf die Blechdicke des Werkstückes 2, die gewünschte Wärmebehandlungstemperatur und -zeit, die Drehzahl und den Durchmesser des Werkstückes 2 sowie ggf. den bereits erzielten Verformungsgrad abgestimmt werden.

Die Vorrichtung arbeitet wie folgt: Nach dem Einspannen des Werkstückes 2 kann entweder sofort wärmebehandelt oder zunächst unter Einsatz der nicht gezeichneten Drückrolle wie üblich gedrückt werden. Soll eine Wärmebehandlung durchgeführt werden, so werden die Induktionsheizung 5 und die Abschreckdüse 6 in vorbestimmter Weise an das Werkstück 2 heranbewegt. Das Werkstück 2 behält entweder seine Rotationsgeschwindigkeit vom Drückvorgang bei, oder wird mit einer abweichenden Rotationsgeschwindigkeit angetrieben. Die Heizung 5 wird über nicht gezeichnete Schalteinrichtungen betätigt und der ebenfalls nicht gezeichnete Wasserzufluß zur Abschreckdüse 6 geöffnet. Wenn sich dann das Werkstück 2 unter der Induktionsheizung 5 hinwegbewegt, wird das Werkstück 2 bereichsweise auf die geforderte Temperatur erhitzt und sofort durch das nachfolgende Durchlaufen der Abschreckdüse 6 wieder abgeschreckt. Dieses Verfahren wird durchgeführt, bis das Werkstück 2 zumindest eine volle Umdrehung durchlaufen hat. Auf diese Weise können teilweise geformte Werkstücke lösungsgeglüht werden, um einen höheren Umformungsgrad oder einen gewünschten Grad der Kaltverfestigung beim Fertigdrücken Zu erreichen. Fertiggedrückte Werkstücke können lösungsgelüht werden, wobei sich ein weiterer Drückschritt zum Entfernen eines etwaigen Wärmebehandlungsverzugs anschließen kann. Fertiggeformte Teile können spannungsarm- oder weichgeglüht werden.

Das erfindungsgemäße Verfahren hat sich insbesondere für Chrom-Nickel-Stähle, Nickelbasislegierungen (wie z.B. Inconel) und Titanlegierungen bewährt. Es wurden beispielsweise Blechschalen von etwa 0,6 m Durchmesser behandelt.

In Abwandlung des beschriebenen und gezeichneten Verfahrens bzw. der beschriebenen und gezeichneten Vorrichtung, kann beispielsweise das erfindungsgemäße Verfahren auch bei Drückeinrichtungen eingesetzt werden, bei denen die Spannvorrichtung aus der Drückmaschine entfernt werden kann. In diesem Falle kann das in der Spannvorrichtung verbleibende Werkstück beispielsweise auf einem drehbaren Schweißtisch wärmebehandelt werden, während in der Drückvorrichtung das nächste Werkstück bis zum Wärmebehandlungsschritt vorgeformt wird. Insbesondere für Werkstücke mit einem größeren Durchmesser und somit größeren Unterschieden in der Umfangsgeschwindigkeit zwischen drehachsennäheren und unfangsnäheren Bereichen, kann anstelle der langgestreckten Induktionsheizung eine eher punktförmige Heizung eingesetzt werden, die sich in einer gesteuerten Bewegung von der Drehachse zum Umfang bewegt, während gleichzeitig das Werkstück rotiert. Die Bewegung der Induktionsheizung erfolgt bevorzugt wendelförmig, so daß auch dadurch ein gewisser Ausgleich der unterschiedlichen Umfangsgeschwindigkeiten erreicht wird. Für kleinere Werkstücke kann es zweckmäßig sein, eine vollfläche Induktionsheizung vorzusehen. Für lange Behandlungsverfahren und Werkstoffe, die eine lange Haltezeit erfordern, ist es schließlich auch möglich, das Werkstück, zweckmäßigerweise mit höherer Geschwindigkeit, eine oder mehrere Umdrehungen unter der Heizung durchlaufen zu lassen, bevor die Abschreckdüse angestellt wird. Längere Haltezeiten können jedoch auch durch eine extrem niedrige Drehgeschwindigkeit des Werkstückes bei gleichzeitig eingestellter Abschreckdüse erzielt werden.

## Patentansprüche

1. Verfahren zur Formgebung von Werkstücken aus einem Metallblech in einer Formgebungsvorrichtung, insbesondere einer Drückvorrichtung, wobei das Metallblech vor, während oder nach einem Formgebungsschritt einem Wärmebehandlungsverfahren unterzogen wird, **dadurch gekennzeichnet**, daß das Wärmebehandlungsverfahren in der Formgebungsvorrichtung durch induktive Erwärmung des Werkstückes durchgeführt wird.

2. Verfahren nach Anspruch 1, **dadurch gekennzeichnet**, daß die Wärmebehandlung bereichsweise mit sofort anschließendem Abschrecken erfolgt.

3. Verfahren nach Anspruch 1 oder 2, **dadurch gekennzeichnet**, daß das Werkstück und eine induktive Erwärmungseinrichtung relativ zueinander bewegt werden.

4. Verfahren nach einem der Ansprüche 1 bis 3, **dadurch gekennzeichnet**, daß das Werkstück und eine Abschreckeinrichtung relativ zueinander bewegt werden.

5. Verfahren nach einem der Ansprüche 1 bis 4, **dadurch gekennzeichnet**, daß das Werkstück in der Formgebungsvorrichtung zwischen zwei Formgebungsschritten lösungsgeglüht wird.

6. Verfahren nach einem der Ansprüche 1 bis 5, **dadurch gekennzeichnet**, daß das Werkstück im Anschluß an das Formgebungsverfahren lösungs- oder spannungsarm geglüht wird.

7. Verfahren nach Anspruch 6, **dadurch gekennzeichnet**, daß das Werkstück im Anschluß an das letzte Lösungsglühen nachgeformt wird.

8. Vorrichtung zur Formgebung von Werkstücken (2) aus einem Metallblech, insbesondere Drückvorrichtung, mit einer Spanneinrichtung (1) für das Werkstück (2), **gekennzeichnet durch** eine induktive Erwärmungseinrichtung (5) zum Durchführen einer Wärmebehandlung, die der Spanneinrichtung (1) derart zugeordnet ist, daß die Wärmebehandlung bei in der Spanneinrichtung (1) eingespanntem Werkstück (2) durchführbar ist.

9. Vorrichtung nach Anspruch 8, **dadurch gekennzeichnet**, daß der Erwärmungseinrichtung (5) eine Abschreckeinrichtung (6) zugeordnet ist.

10. Vorrichtung nach Anspruch 8 oder 9, **dadurch gekennzeichnet**, daß das Werkstück (2) um eine Achse (4) drehbar gelagert und an der induktiven Erwärmungseinrichtung (5) vorbei bewegbar ist.

11. Vorrichtung nach Anspruch 10, **dadurch gekennzeichnet**, daß die Erwärmungseinrichtung eine langgestreckte, der Werkstückgeometrie angepaßte Induktionsheizung (5) enthält, die sich vorzugsweise über das Werkstück (2) von seinem Umfang bis in die Nähe der Drehachse (4) erstreckt.

12. Vorrichtung nach einem der Ansprüche 9 bis 11, **dadurch gekennzeichnet**, daß die Abschreckeinrichtung eine langgestreckte Abschreckdüse (6) enthält, die in Drehrichtung des Werkstückes (2) der Erwärmungseinrichtung (5) nachgeordnet ist.
